# EUROPÄISCHE PATENTSCHRIFT

(11) **EP 1 174 699 B1**
(45) Veröffentlichungstag und Bekanntmachung des Hinweises auf die Patenterteilung: **25.01.2006**
(21) Anmeldenummer: 00115559.7
(22) Anmeldetag: 19.07.2000
(51) Int. Cl.: G01M 5/00

(54) **Verfahren und Einrichtung zum Prüfen der Festigkeit von stehend verankerten Masten**
Method and device for testing the solidity of anchored standing masts
Procédé et dispositif pour tester la solidité de mâts debout ancrés

(43) Veröffentlichungstag der Anmeldung: 23.01.2002
(73) Patentinhaber: Roch Prüfdienste AG, 23569 Lübeck (DE)
(72) Erfinder: Roch, Oliver, 23623 Gnissau (DE)
(74) Vertreter: Wilcken, Thomas

(56) Entgegenhaltungen:
- EP-A- 0 638 794
- WO-A-96/31655
- US-A- 6 023 986

## Beschreibung

Die Erfindung betrifft ein Verfahren zum Prüfen der Festigkeit eines stehend und ortsfest verankerten Mastes, bei dem der Mast mechanisch biegebelastet wird und hierbei das Verhalten des Mastes zur Ermittlung seiner Festigkeit ausgewertet wird. Weiterhin betrifft die Erfindung eine Einrichtung zum Prüfen eines so verankerten Mastes mit einem mobilen Prüfgerät, insbesondere Prüffahrzeug, an dem eine Krafteinheit vorgesehen ist, über die der Mast biegebelastbar ist, und das eine Einrichtung zur Aufnahme der das Verhalten des Mastes beim Prüfvorgang dokumentierenden Daten aufweist.

Bei Verfahren und Einrichtungen dieser Art (EP 0 638 794 B1, WO 97/40355) geht es insbesondere um das Prüfen der Stand- und Biegefestigkeit von Leuchten tragenden Masten von Beleuchtungsanlagen, aber auch von Signale, Verkehrsschilder und dergleichen tragenden Masten, die beispielsweise von Gemeinden, Energieversorgern und Städten betrieben werden.

EP 0 638 794 A beschreibt ein Verfahren und eine Vorrichtung zum Prüfen der Stand-und Biegefestigkeit von stehend verankerten Masten, bei dem die Masten einem variablen Biegemoment ausgesetzt werden. Mit einer an einem Fahrzeug angeordneten Krafteinheit wird eine ansteigende Kraft in einen Mast oberhalb seiner Verankerung eingeleitet und der Mast so mit einem Biegemoment belastet. Mit einem oberhalb der Mastverankerung an dem Mast anliegenden Wegsensor wird dann die Auslenkung des Mastes aufgenommen und mit Hilfe der Kraft und der Auslenkung bestimmt, ob sich der Mast plastisch verformt.

Wenn einem mit der Mastprüfung beauftragten Unternehmen vom Betreiber Kartenmaterial zur Verfügung gestellt werden kann, besteht grundsätzlich die Möglichkeit, die Standorte von zu prüfenden oder geprüften Masten in eine beispielsweise ein bestimmtes Stadtgebiet, in dem die Masten aufgestellt sind, darstellende Karte einzuzeichnen. Hierbei orientiert man sich im Hinblick auf die Zuordnung der jeweiligen Maststandorte an Hausnummern, Straßenkreuzungen, Straßennamen und baulichen Gegebenheiten. Derzeit werden auch noch Masten nacheinander entlang einer Straße nummeriert.

Abgesehen von dem hiermit verbundenen beträchtlichen Aufwand kommt es aber häufig im Laufe der Zeit zu Änderungen von Straßenverläufen und von sonstigen vorerwähnten Orientierungsmerkmalen sowie zum Auswechseln und Neuerstellen von Masten, was zwangsläufig bei der Vielzahl der vorhandenen Mastsysteme beim Betreiber zu einem Verlust der Übersicht führt, falls das vorhandene Kartenmaterial mit eingetragenen Maststandorten nicht laufend aktualisiert wird, was nur in seltenen Fällen geschieht.

Deshalb haben sehr viele Betreiber von Beleuchtungsanlagen keinen Überblick über ihre Mastsysteme. Hierdurch wird die Wartung und Instandhaltung erschwert und unwirtschaftlich oder sogar unmöglich. Eine wirtschaftliche und auch sicherheitsbewusste Planung setzt deshalb voraus, dass der Betreiber solcher Anlagen und Systeme genaue Kenntnis vom Zustand und Standort der Masten hat.

Aus US 6,023,986 A ist ein System zum Lokalisieren von Schädigungen einer Rohrleitung bekannt. Dieses System beinhaltet ein Trägheitsnavigationssystem, ein "in-line"-Prüfwerkzeug, Kontrollpunkte zur Verwendung mit einem GPS (Global Positioning System) und dem Trägheitsnavigationssystem sowie ein Computerprogramm zum Aufnehmen und Verarbeiten der ermittelten Daten. Mittels des Trägheitsnavigationssystems wird die geografische Länge, Breite und Höhe der Prüfstelle bestimmt, wobei die Genauigkeit der dabei ermittelten Werte durch Benutzung des GPS verbessert werden kann.

Durch die Erfindung sollen die aufgezeigten Probleme beseitigt und somit ein Verfahren und eine Einrichtung vorgeschlagen werden, mit denen im Zuge einer Standsicherheitsprüfung von Masten in zuverlässiger Weise der Standort des jeweiligen Mastes exakt ermittelt sowie einfach dokumentiert werden kann.

Zur Lösung dieser Aufgabe wird das eingangs erwähnte Verfahren erfindungsgemäß so weiter ausgestaltet, dass im zeitlichen Zusammenhang mit dem Prüfvorgang der Maststandort mittels eines Satelliten-Navigationssystems ermittelt und dokumentiert wird. Insbesondere geschieht dies durch die Nutzung des GPS (Global Positioning System) und des noch genauer arbeitenden DGPS (Differential-GPS) als Navigationssystem, zumal heute die DGPS-Messgenauigkeit in Bezug auf Standortkoordinaten im Zentimeterbereich liegt.

Dabei wird zum Prüfen ein Prüfgerät verwendet, an welchem ein verstellbarer Ausleger vorhanden ist. Dieser Ausleger ist am freien Ende mit einer Manschette zum Umfassen des Mastes versehen, wobei eine GPS-Antenne lösbar an dem die Manschette tragenden Auslegerende angeordnet ist.

Anders als bei bekannten Navigationssystemen (DE 41 36 136 C1, EP 0 574 009 A2, EP 0 847 537 B1, US 5,422,813 und US 5,477,228) geht es beim erfindungsgemäß zur Anwendung kommenden System nicht um die Ortsbestimmung von beweglichen Objekten und auch nicht um ein Navigationssystem im eigentlichen Sinne, sondern um die Ermittlung von festen Maststandorten, was vor, während oder auch nach der Festigkeitsprüfung des jeweiligen Mastes geschehen kann.

Insbesondere werden die Koordinaten des Maststandortes aufgenommen und kartografisch dokumentiert, indem beispielsweise der Standort des Mastes in Form eines Symbols auf eine digitale Karte übertragen wird. Auch für unterschiedliche Masttypen können entsprechende Symbole vorgesehen und auf eine solche Karte übertragen werden.

Weiterhin besteht die Möglichkeit, aus digitalisierten Standortdaten mehrerer Masten und der digitalen Karte eine Datenbank zu erstellen, die vom Prüfunternehmen dem Betreiber der Mastsysteme zur Verfügung gestellt wird. Zweckmäßigerweise wird die Datenbank in Verbindung mit einer Prüfsoftware angelegt, so dass sie auch die Daten der jeweiligen Mastprüfergebnisse enthält und der Betreiber nicht nur ermitteln kann, wo die betreffenden Masten stehen, sondern auch, welche Masten ggf. beim Prüfvorgang als nicht ausreichend standfest ermittelt wurden.

Die Prüfsoftware verknüpft also die Koordinaten eines Mastes mit den Ergebnissen der Standsicherheitsprüfung, so dass ein homogener Datensatz entsteht, der in der Datenbank gespeichert wird und dann mittels eines Geoinforrnationssystems in geeigneten georeferenzierten digitalen Karten dargestellt werden kann. Dadurch ist es natürlich auch zusätzlich möglich, eingelesene Daten direkt über die Karte abzufragen.

Die einleitend erwähnte Einrichtung zum Prüfen von Masten ist dadurch gekennzeichnet, dass zwecks Feststellung des Maststandortes das Prüfgerät mit einem GPS-Empfänger (Global Positioning System) zum Empfang von GPS-Signalen und einem UKW-Empfänger zum Empfang von Korrekturdaten über RDS-Signale (Radio Data System) ausgestattet ist und dass der GPS-Empfänger und der UKW-Empfänger einen DGPS-Empfänger (Digital-GPS) bilden, dessen den Standort des Mastes darstellenden Signale auf einen digitalen Datenspeicher übertragbar sind. Hierbei kann es sich um ein Notebook, einen PC oder Organizer handeln.

Die mobilen Prüfgeräte, also Prüffahrzeuge, sind mit einem verstellbaren Ausleger ausgestattet, der am freien Ende mit einer Manschette zum Umfassen des Mastes vorgesehen ist. Dabei ist die GPS-Antenne lösbar an dem die Manschette tragenden Auslegerende angeordnet, also in größtmöglicher Nähe zu dem von der Manschette umfassten Mast, um so zu einer weitestgehend genauen Ermittlung der Koordinaten des Maststandortes zu kommen.

Es wird zweckmäßig sein, die Standortbestimmung vor der Prüfung der Standfestigkeit des Mastes durchzuführen, da es passieren kann, dass sich ein defekter Mast beim Prüfvorgang plastisch verformen könnte und dann keine exakte Standortbestimmung mehr möglich sein könnte.

In der anliegenden Zeichnung ist ein nachfolgend beschriebenes Ausführungsbeispiel einer erfindungsgemäßen Einrichtung schematisch dargestellt.

Das Prüfgerät ist ein mobiles Prüffahrzeug 1 mit einem mehrarmigen Ausleger 2, der bei stehendem Prüffahrzeug gegen einen zu prüfenden Mast 3 und je nach Prüfverfahren ggf. auch umgekehrt bewegbar ist, und zwar mit einer am freien Ende des Auslegers 2 angebrachten und um den Mast 3 gelegten Manschette 4. Einzelheiten des Prüfverfahrens sowie die Ermittlung der die Mastfestigkeit betreffenden Messwerte sind bekannt und brauchen deshalb nicht weiter beschrieben zu werden. Insofern kann u. a. verwiesen werden auf die bereits zitierten Schriften EP 0 638 794 B1 und WO 97/40355.

Von Satelliten 5 kommende GPS-Signale 6, die von einer dem Prüffahrzeug 1 zugeordneten GPS-Antenne 7 aufgefangen werden, gelangen zu einem nicht weiter dargestellten GPS-Empfänger im oder am Prüffahrzeug 1. Dieselben GPS-Signale werden ebenfalls von einer GPS-Antenne 8 einer ortsfesten und exakt eingemessenen Referenzstation 9 empfangen, die aus den aktuellen GPS-Signalen ihren "Standort" ermittelt und bei Abweichungen von ihrem tatsächlichen Standort Korrekturdaten berechnet und diese über Funk an eine schematisch durch einen Sendemast dargestellte UKW-Rundfunkstation 10 übermittelt.

Von der Sendeantenne 11 dieser Station 10 aus werden die Korrekturdaten zusammen mit den üblichen und weitere Informationsdaten beinhaltenden RDS-Signalen 12 abgestrahlt und von einer am Prüffahrzeug 1 installierten UKW-Antenne 13 eines UKW-Tuners empfangen.

Dieser bildet zusammen mit dem GPS-Empfänger einen DGPS-Empfänger, also einen Differential-GPS-Empfänger, der aufgrund der mit einem Decoder vom RDS-Signal abgetrennten Korrekturdaten, auch Differenzsignale genannt, eine hohe Genauigkeit in Bezug auf die Feststellung der Koordinaten des Maststandortes ermöglicht. Weitere Einzelheiten dieser an sich bekannten Technik ergeben sich u. a. auch aus den bereits zitierten Schriften DE 41 36 136 C1, EP 0 574 009 A2 und US 5,477,228.

Wie bereits erwähnt wurde, können die jeweils ermittelten Daten für die Koordinaten des Maststandortes und die beim Prüfvorgang festgestellten Festigkeitswerte in digitaler Form in einem Datenspeicher abgespeichert werden, der ein im Prüffahrzeug befindliches Notebook mit angeschlossenem Monitor sein kann, auf dem die Daten tabellarisch oder auch die digitalisierte Karte mit dem jeweiligen Maststandort dargestellt werden können. Die Datenbank mit zugehöriger Software kann einem externen Rechner zugeordnet werden, der sich am Sitz des die Mastprüfung durchführenden Unternehmens befinden kann und dem die in die Datenbank aufzunehmenden Daten über Funk zugeführt werden. Schließlich können an den Rechner Ausgabegeräte angeschlossen sein, wie etwa Monitore, Drucker und dergleichen, denen die in der Datenbank abgespeicherten Werte unter Anwendung einer geeigneten Software zugeführt werden.

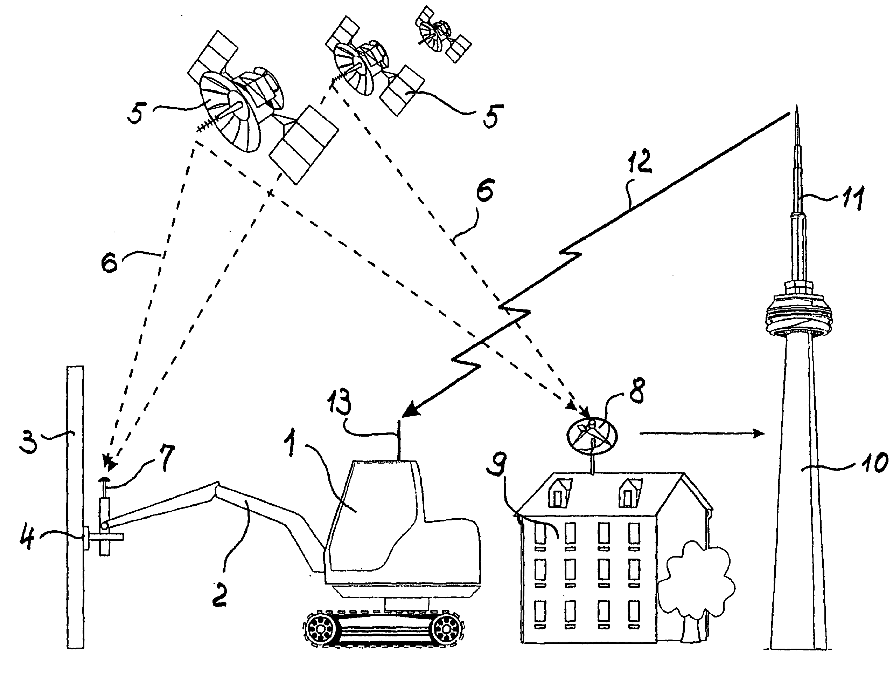

## Patentansprüche

1. Verfahren zum Prüfen der Festigkeit eines stehend und ortsfest verankerten Mastes (3), bei dem der Mast mechanisch biegebelastet wird und hierbei das Verhalten des Mastes zur Ermittlung seiner Festigkeit ausgewertet wird, **dadurch gekennzeichnet, dass** im zeitlichen Zusammenhang mit dem Prüfvorgang der Maststandort mittels eines Satelliten-Navigationssystems ermittelt und dokumentiert wird, wobei zum Prüfen ein Prüfgerät (1) verwendet wird, an welchem ein verstellbarer Ausleger vorhanden ist, der am freien Ende mit einer Manschette (4) zum Umfassen des Mastes (3) versehen ist, wobei eine GPS-Antenne (7) lösbar an dem die Manschette (4) tragenden Auslegerende angeordnet ist.

2. Verfahren nach Anspruch 1 **gekennzeichnet durch** die Nutzung des GPS, insbesondere des DGPS, als Navigationssystem.

3. Verfahren nach einem der Ansprüche 1 und 2, **dadurch gekennzeichnet, dass** die Koordinaten des Maststandortes aufgenommen und kartografisch dokumentiert werden.

4. Verfahren nach einem der Ansprüche 1 bis 3, **dadurch gekennzeichnet, dass** der Standort des Mastes (3) in Form eines Symbols auf eine digitale Karte übertragen wird.

5. Verfahren nach Anspruch 4, **dadurch gekennzeichnet, dass** aus digitalisierten Standortdaten mehrerer Masten (3) und der digitalen Karte eine Datenbank erstellt wird.

6. Verfahren nach Anspruch 5, **dadurch gekennzeichnet, dass** die Datenbank in Verbindung mit einer auch die digitalisierten Daten der Mastprüfergebnisse enthaltenden Prüfsoftware angelegt wird.

7. Einrichtung zum Prüfen der Festigkeit eines stehend und ortsfest verankerten Mastes mit einem mobilen Prüfgerät (1), insbesondere Prüffahrzeug, an dem eine Krafteinheit vorgesehen ist, über die der Mast biegebelastbar ist, und das eine Einrichtung zur Aufnahme der das Verhalten des Mastes beim Prüfvorgang dokumentierenden Daten aufweist, **dadurch gekennzeichnet, dass** zwecks Feststellung des Maststandortes das Prüfgerät (1) mit einem GPS-Empfänger zum Empfang von GPS-Signalen und einem UKW-Empfänger zum Empfang von Korrekturdaten ausgestattet ist, wobei an dem Prüfgerät (1) ein verstellbarer Ausleger (2) vorhanden ist, der am freien Ende mit einer Manschette (4) zum Umfassen des Mastes (3) versehen ist, wobei die GPS-Antenne (7) lösbar an dem die Manschette (4) tragenden Auslegerende angeordnet ist und wobei der GPS-Empfänger und der UKW-Empfänger einen DGPS-Empfänger bilden, dessen den Standort des Mastes (3) darstellenden Signale auf einen digitalen Datenspeicher übertragbar sind.

## Claims

1. A method for testing the strength of a vertically and stationarily anchored mast (3), with which the mast is mechanically loaded in bending and while doing so, the behaviour of the mast is evaluated for determining its strength, **characterised in that** in time-related manner with the testing procedure, the mast location is determined and documented by way of a satellite navigation system, wherein a testing apparatus (1) is used for testing, on which an adjustable arm is present, which at the free end is provided with a collar (4) for encompassing the mast (3), wherein a GPS-antenna (7) is releasably arranged on the arm end carrying the collar (4).

2. A method according to claim 1, **characterised by** the use of the GPS, in particular the DGPS as a navigation system.

3. A method according to one of the claims 1 and 2, wherein the coordinates of the mast location are recorded and cartographically documented.

4. A method according to one of the claims 1 to 3, wherein the location of the mast is transmitted in the form of a symbol onto a digital map.

5. A method according to claim 4, wherein from digitalised location data of several masts and from the digital map a data bank is set up.

6. A method according to claim 5, wherein the data bank is set up in combination with testing software also containing the digitalised data of the mast test results.

7. A means for testing the strength of a vertically and stationarily anchored mast with a mobile testing apparatus (1), in particular with a testing vehicle, on which a force unit is provided, via which the mast may be loaded in bending, said testing apparatus comprising a means for recording the data documenting the behaviour of the mast with the testing procedure, **characterised in that** for the purpose of determining the mast location, the testing apparatus (1) is provided with a GPS-receiver for receiving GPS-signals, and with a VHF-receiver for receiving correction data, wherein an adjustable arm (2) is present on the testing apparatus (1) and is provided at the free end with a collar (4) for encompassing the mast (3), wherein the GPS-antenna (7) is releasably arranged on the arm end carrying the collar (4), and wherein the GPS-receiver and the VHF-receiver form a DGPS- receiver whose signals representing the location of the mast (3) may be transmitted onto a digital data memory.

## Revendications

1. Procédé pour contrôler la résistance mécanique d'un mât (3) ancré verticalement et en position fixe, selon lequel le mât est sollicité mécaniquement en flexion et, par cela, la tenue du mât est évaluée en vue de la détermination de sa résistance mécanique, **caractérisé en ce qu'**en relation temporelle avec le processus de contrôle, le site d'implantation du mât est déterminé et répertorié au moyen d'un système de navigation par satellites, un appareil de contrôle (1) étant alors employé pour le contrôle, appareil sur lequel est présent un bras réglable qui est muni, à l'extrémité libre, d'un manchon (4) destiné à enserrer le mât (3), une antenne GPS (7) étant disposée, de façon amovible, à l'extrémité du bras, qui porte le manchon (4).

2. Procédé selon la revendication 1, **caractérisé par** l'utilisation du GPS, en particulier du DGPS, comme système de navigation.

3. Procédé selon l'une des revendications 1 et 2, **caractérisé en ce que** les coordonnées du site d'implantation du mât sont enregistrées et répertoriées cartographiquement

4. Procédé selon l'une des revendications 1 à 3, **caractérisé en ce que** le site d'implantation du mât (3) est reporté sous forme d'un symbole sur une carte numérique.

5. Procédé selon la revendication 4, **caractérisé en ce qu'**une banque de données est établie à partir de données numérisées de sites d'implantation de plusieurs mâts (3) et de la carte numérique.

6. Procédé selon la revendication 5, **caractérisé en ce que** la banque de données est mise en place en liaison avec un logiciel de contrôle contenant également les données numérisées des résultats du contrôle de mât.

7. Equipement pour le contrôle de la résistance mécanique d'un mât ancré verticalement est en position fixe, comportant un appareil de contrôle mobile (1), en particulier un véhicule de contrôle, sur lequel est prévu un ensemble applicateur de force, par l'intermédiaire duquel le mât peut être sollicité en flexion, et qui présente un dispositif pour l'enregistrement des données répertoriant la tenue du mât lors du processus de contrôle, **caractérisé en ce que**, dans le but de déterminer le site d'implantation du mât, l'appareil de contrôle (1) est équipé d'un récepteur GPS pour la réception de signaux GPS et d'un récepteur d'ondes ultra-courtes pour la réception de données de correction, un bras réglable (2) étant présent sur l'appareil de contrôle (1), lequel bras est muni, à l'extrémité libre, d'un manchon (4) destiné à enserrer le mât (3), l'antenne GPS (7) étant disposée, de façon amovible, à l'extrémité du bras, qui porte le manchon (4), et le récepteur GPS et le récepteur d'ondes ultra-courtes formant un récepteur DGPS, dont les signaux représentant le site d'implantation du mât (3) peuvent être reportés dans une mémoire de données numérique.
